# EUROPEAN PATENT APPLICATION

(11) **EP 4 506 417 A1**
(43) Date of publication of application: **12.02.2025**
(21) Application number: 22905480.4
(22) Date of filing: 16.08.2022
(51) Int. Cl.: C08L 67/06, C08K 3/40, C08K 3/26

(54) **FORMULA FOR ANTI-CORROSION AND ANTI-ULTRAVIOLET MATERIAL**

(30) Priority: 07.03.2022 CN 202210221570
(71) Applicant: Creative Motor Technology (Dongguan) Co., Ltd., Dongguan City, Guangdong 523713 (CN)
(72) Inventor: QI, Yitong, Shenzhen City, Guangdong 518000 (CN); DENG, Min, Shenzhen City, Guangdong 518000 (CN); XIE, Shihong, Shenzhen City, Guangdong 518000 (CN)
(74) Representative: Zaboliene, Reda
(86) International application number: PCT/CN2022/112871
(87) International publication number: WO 2023/168907

(57) **Abstract**

The present invention discloses a formula of an anti-corrosion and anti-ultraviolet material, including: 10% to 20% of unsaturated polyester resin, 5% to 10% of styrene and polystyrene, 10% to 20% of glass fiber, 35% to 45% of rock powder and 3% to 5% of other reagent. A casing of an aerator may be made of the anti-corrosion and anti-ultraviolet material of the present invention, so as to prevent the aerator from being corroded and affecting its normal work after it works underwater for a long time.

## Description

### FIELD OF TECHNOLOGY

The present invention particularly relates to a formula of an anti-corrosion and anti-ultraviolet material.

### BACKGROUND

An aerator is a machine that is often used in fishery and aquaculture. Its main function is to increase the oxygen content in water to prevent fish in the water from hypoxia, and it can also suppress the growth of anaerobic bacteria in the water and prevent the deterioration of pond water from threatening the living environment of fish.

The aerator is always soaked in pond water and subjected to corrosion of water and ultraviolet. The existing aerator is prone to damage if it is not maintained regularly, bringing losses to the fish pond.

### SUMMARY

The present invention provides a technical solution to solve the above problems.

A formula of an anti-corrosion and anti-ultraviolet material includes: 10% to 20% of unsaturated polyester resin, 5% to 10% of styrene and polystyrene, 10% to 20% of glass fiber, 35% to 45% of rock powder and 3% to 5% of other reagent.

Preferably, the formula includes 10% of unsaturated polyester resin, 5% of styrene and polystyrene, 10% of glass fiber, 35% of rock powder and 3% of other reagent.

Preferably, the formula includes 15% of unsaturated polyester resin, 7% of styrene and polystyrene, 15% of glass fiber, 40% of rock powder and 4% of other reagent.

Preferably, the formula includes 20% of unsaturated polyester resin, 10% of styrene and polystyrene, 20% of glass fiber, 45% of rock powder and 5% of other reagent.

Preferably, the other reagent is a curing agent, a mold release agent, a toner or the like.

Preferably, the unsaturated polyester resin is formed by polycondensation of dibasic acid and diol or saturated dibasic acid and unsaturated diol.

Preferably, the polystyrene is a polymer synthesized from styrene monomer by free radical addition polymerization.

Preferably, the glass fiber is made from pyrophyllite, quartz sand, limestone, dolomite, calciborite and ascharite by high-temperature melting, drawing, winding and weaving.

Compared with the prior art, the present invention has the following beneficial effects: a casing of an aerator may be made of the anti-corrosion and anti-ultraviolet material of the present invention, so as to prevent the aerator from being corroded and affecting its normal work after it works underwater for a long time.

The additional aspects and advantages of the present invention will be set forth in part in the description which follows, parts of which will become apparent from the description below, or will be understood by the practice of the present invention.

### DESCRIPTION OF THE EMBODIMENTS

The technical solutions in the embodiments of the present invention will be clearly and completely described below. It is apparent that the described embodiments are only a part, rather than all of the embodiments of the present invention. All other embodiments obtained by those of ordinary skill in the art based on the embodiments of the present invention without creative work are within the protection scope of the present invention.

In the embodiments of the present invention, a formula of an anti-corrosion and anti-ultraviolet material includes: 10% to 20% of unsaturated polyester resin, 5% to 10% of styrene and polystyrene, 10% to 20% of glass fiber, 35% to 45% of rock powder and 3% to 5% of other reagent.

Experimental data are as follows:

| **No.** | **Test item** | | **Target value** | **Test result** | **Conclusion** |
|---|---|---|---|---|---|
| 1 | Drop testing | | Drop height: 3 m, no damage | No damage | Acceptable |
| 2 | Aging resistance | | After artificial weathering testing under a xenon lamp for 300 h, there is no efflorescence or cracking, and the discoloration rating is 4-5 | There was no obvious efflorescence or cracking on the surface of the sample, and the discoloration rating was 4-5 | Acceptable |

| 3 | Flammability rating | | HB | HB | Acceptable |
|---|---|---|---|---|---|
| 4 | Resistance to chemical medium | 30% sulfuric acid | After soaked for 24 h, the weight change is ±5%, and the Barcol hardness change is ±5% | Weight change: 1.6%; Barcol hardness change: - 1.6% | Acceptable |
| | | 5% hydrochloric acid | After soaked for 24 h, the weight change is ±5%, and the Barcol hardness change is ±5% | Weight change: 1.4%; Barcol hardness change: - 3.3% | Acceptable |
| | | 5% nitric acid | After soaked for 24 h, the weight change is ±5%, and the Barcol hardness change is ±5% | Weight change: 1.6%; Barcol hardness change: 0% | Acceptable |
| | | 10% sodium hydroxide | After soaked for 24 h, the weight change is ±5%, and the Barcol hardness change is ±5% | Weight change: 1.2%; Barcol hardness change: - 3.4% | Acceptable |
| | | Saturated sodium carbonate solution | After soaked for 24 h, the weight change is ±5%, and the Barcol hardness change is ±5% | Weight change: 1.0%; Barcol hardness change: 0% | Acceptable |
| | | 10% ammonia water | After soaked for 24 h, the weight change is ±5%, and the Barcol hardness change is ±5% | Weight change: 1.0%; Barcol hardness change: - 1.8% | Acceptable |
| 5 | Impact testing | A 1 kg iron ball falls freely from a height of 4 m and hits the geometric center of the side surface on the long side | After two hits, only cracks are produced, and no fragments larger than 4 cm² are produced | After the testing, only slight cracks were produced, and no fragments larger than 4 cm² were produced | Acceptable |
| 6 | Lead content, mg/kg | | ≤1000 | N.D. (<5) | Acceptable |
| 7 | Mercury content, mg/kg | | ≤1000 | N.D. (<5) | Acceptable |
| 8 | Cadmium content, mg/kg | | ≤1000 | N.D. (<5) | Acceptable |
| 9 | Hexavalent chromium content, mg/kg | | ≤1000 | N.D. (<5) | Acceptable |
| 10 | Polybrominated diphenyl content, mg/kg | | ≤1000 | N.D. (<10) | Acceptable |
| 11 | Polybrominated diphenyl ether, mg/kg | | ≤1000 | N.D. (<10) | Acceptable |

Preferably, the formula includes 10% of unsaturated polyester resin, 5% of styrene and polystyrene, 10% of glass fiber, 35% of rock powder and 3% of other reagent.

Preferably, the formula includes 15% of unsaturated polyester resin, 7% of styrene and polystyrene, 15% of glass fiber, 40% of rock powder and 4% of other reagent.

Preferably, the formula includes 20% of unsaturated polyester resin, 10% of styrene and polystyrene, 20% of glass fiber, 45% of rock powder and 5% of other reagent.

Preferably, the other reagent is a curing agent, a mold release agent, a toner or the like.

Preferably, the unsaturated polyester resin is formed by polycondensation of dibasic acid and diol or saturated dibasic acid and unsaturated diol.

Preferably, the polystyrene is a polymer synthesized from styrene monomer by free radical addition polymerization.

Preferably, the glass fiber is made from pyrophyllite, quartz sand, limestone, dolomite, calciborite and ascharite by high-temperature melting, drawing, winding and weaving.

For those skilled in the art, it is apparent that the present invention is not limited to the details of the above exemplary embodiments, and the present invention can be implemented in other specific forms without departing from the spirit or basic features of the present invention. Therefore, the embodiments should be regarded in all aspects as exemplary and non-limiting. The scope of the present invention is defined by the appended claims rather than the description above, and therefore, it is intended that all changes falling within the meaning and scope of equivalent elements of the claims are included in the present invention.

## Claims

1. A formula of an anti-corrosion and anti-ultraviolet material, comprising: 10% to 20% of unsaturated polyester resin, 5% to 10% of styrene and polystyrene, 10% to 20% of glass fiber, 35% to 45% of rock powder and 3% to 5% of other reagent.

2. The formula of an anti-corrosion and anti-ultraviolet material according to claim 1, **characterized in that** the formula comprises 10% of unsaturated polyester resin, 5% of styrene and polystyrene, 10% of glass fiber, 35% of rock powder and 3% of other reagent.

3. The formula of an anti-corrosion and anti-ultraviolet material according to claim 1, **characterized in that** the formula comprises 15% of unsaturated polyester resin, 7% of styrene and polystyrene, 15% of glass fiber, 40% of rock powder and 4% of other reagent.

4. The formula of an anti-corrosion and anti-ultraviolet material according to claim 1, **characterized in that** the formula comprises 20% of unsaturated polyester resin, 10% of styrene and polystyrene, 20% of glass fiber, 45% of rock powder and 5% of other reagent.

5. The formula of an anti-corrosion and anti-ultraviolet material according to claim 1, **characterized in that** the other reagent is a curing agent, a mold release agent, a toner or the like.

6. The formula of an anti-corrosion and anti-ultraviolet material according to claim 1, **characterized in that** the unsaturated polyester resin is formed by polycondensation of dibasic acid and diol or saturated dibasic acid and unsaturated diol.

7. The formula of an anti-corrosion and anti-ultraviolet material according to claim 1, **characterized in that** the polystyrene is a polymer synthesized from styrene monomer by free radical addition polymerization.

8. The formula of an anti-corrosion and anti-ultraviolet material according to claim 1, **characterized in that** the glass fiber is made from pyrophyllite, quartz sand, limestone, dolomite, calciborite and ascharite by high-temperature melting, drawing, winding and weaving.
